# EUROPÄISCHE PATENTSCHRIFT

(11) **EP 3 480 160 B1**
(45) Veröffentlichungstag und Bekanntmachung des Hinweises auf die Patenterteilung: **18.03.2020**
(21) Anmeldenummer: 18201839.0
(22) Anmeldetag: 22.10.2018
(51) Int. Cl.: B66F 9/24, B62D 15/02, B60R 1/00, B66F 9/075, B66F 17/00

(54) **VERFAHREN ZUR FAHRUNTERSTÜTZUNG BEI EINEM FLURFÖRDERZEUG UND FLURFÖRDERZEUG**
INDUSTRIAL TRUCK AND DRIVER SUPPORT METHOD IN AN INDUSTRIAL TRUCK
PROCÉDÉ D'AIDE À LA CONDUITE D'UN CHARIOT DE MANUTENTION ET CHARIOT DE MANUTENTION

(30) Priorität: 24.10.2017 DE 102017124788
(43) Veröffentlichungstag der Anmeldung: 08.05.2019
(73) Patentinhaber: Jungheinrich Aktiengesellschaft, 22047 Hamburg (DE)
(72) Erfinder: FISCHBACH, Hennes, 70839 Gerlingen (DE); DOHRMANN, Lars, 22339 Hamburg (DE); ROCKEL, Sebastian, 22763 Hamburg (DE)
(74) Vertreter: Seemann & Partner Patentanwälte mbB

(56) Entgegenhaltungen:
- EP-A1- 3 020 868
- DE-A1-102007 063 226
- JP-A- 2014 239 357

## Beschreibung

Die Erfindung betrifft ein Verfahren zur Fahrunterstützung bei einem Flurförderzeug und ein entsprechendes Flurförderzeug, insbesondere Gabelstapler, welches eine Lenkvorrichtung und ein Umgebungsanzeigesystem umfasst, welches wenigstens eine Kamera, eine Bildverarbeitungsvorrichtung und eine im Bereich eines Fahrerplatzes des Flurförderzeugs angeordnete Anzeigevorrichtung umfasst, wobei ein Lenkeinschlag der Lenkvorrichtung erfasst wird und mittels der wenigstens einen Kamera Bilder wenigstens eines Teils der Umgebung des Flurförderzeugs erfasst werden und in der Bildverarbeitungsvorrichtung ein dem erfassten Lenkeinschlag entsprechender Fahrweg des Flurförderzeugs über die erfassten Bilder überlagert wird und die mit dem Fahrweg überlagerten Bilder auf der Anzeigevorrichtung angezeigt werden.

Aus DE 10 2007 063 226 A1 ist ein Verfahren zur Fahrunterstützung bei einem Flurförderzeug mit einer Lenkvorrichtung mit Sensormitteln zur Erfassung des Lenkeinschlags der Lenkvorrichtung, mit einem Fahrerplatz und einer im Bereich des Fahrerplatzes angeordneten Darstellungsvorrichtung bekannt. Dabei geht DE 10 2007 063 226 A1 von in Flurförderzeugen häufig vorhandenen Anzeigesystemen aus, die die Fahrerperspektive darstellen und bei denen eine Unterstützung teilweise auch bei Vorwärtsfahrt erfolgt, wenn beispielsweise große und sperrige Lasten transportiert werden, die eine direkte Sicht des Fahrers nach vorne verhindern. Gabelstapler fahren oftmals auch nicht nur zum Rangieren, sondern auch für Transportwege rückwärts. Durch ein Kamerasystem für die Rückwärtsfahrt entfällt für den Fahrer das sonst erforderliche Drehen des Kopfes, was bei herkömmlichen Gabelstaplern während der gesamten Rückwärtsfahrt erforderlich ist.

Die Unterstützung des Fahrers wird gemäß DE 10 2007 063 226 A1 verbessert, indem der Lenkeinschlag durch die Sensormittel erfasst wird und eine mögliche, durch den Lenkeinschlag bestimmte Fahrspur des Flurförderzeugs in Bezug auf dessen Längsachse durch eine Recheneinheit bestimmt und die Fahrspur auf der Darstellungsvorrichtung dargestellt wird.

Demgegenüber liegt der vorliegenden Erfindung die Aufgabe zugrunde, den Fahrer beim Rangieren zu unterstützen und den Betrieb des Flurförderzeugs sicherer und schneller zu gestalten.

Diese Aufgabe wird gelöst durch ein Verfahren zur Fahrunterstützung bei einem Flurförderzeug, insbesondere Gabelstapler, welches eine Lenkvorrichtung und ein Umgebungsanzeigesystem umfasst, welches wenigstens eine Kamera, eine Bildverarbeitungsvorrichtung und eine im Bereich eines Fahrerplatzes des Flurförderzeugs angeordnete Anzeigevorrichtung umfasst, wobei ein Lenkeinschlag der Lenkvorrichtung erfasst wird und mittels der wenigstens einen Kamera Bilder wenigstens eines Teils der Umgebung des Flurförderzeugs erfasst werden und in der Bildverarbeitungsvorrichtung ein dem erfassten Lenkeinschlag entsprechender Fahrweg des Flurförderzeugs über die erfassten Bilder überlagert wird und die mit dem Fahrweg überlagerten Bilder auf der Anzeigevorrichtung angezeigt werden, welches dadurch weitergebildet ist, dass ein dem erfassten Lenkeinschlag entsprechender Fahrweg einer auf dem Flurförderzeug geförderten Last über die erfassten Bilder überlagert und angezeigt wird.

Der Erfindung liegt der Grundgedanke zugrunde, dass die Fahrwegdarstellungen der bekannten Systeme sich nur auf die feste Fahrzeugkontur beziehen und nicht auf die mögliche Last, die auf den Gabeln liegt. Falls in der Anzeige die Last überhaupt zu sehen ist, stellt sich das Problem, dass allgemein Objekte, die sich oberhalb der Bodenebene erstrecken, verzerrt dargestellt werden. In entsprechenden Bildern wirken Lasten daher deutlich größer, als sie eigentlich sind. Bei der Darstellung der Umgebung vor dem Fahrzeug wird eine Last verzerrt abgebildet. Das tatsächliche Ende der Last kann mit dem bekannten System nicht zuverlässig abgeschätzt werden.

Die erfindungsgemäße Lösung ermöglicht es nun, auf einer Anzeigevorrichtung die Umgebung des Flurförderzeugs beispielsweise in einer Draufsicht oder einer Schrägansicht darzustellen und den durch die Last erwarteten Fahrweg anzuzeigen. Die sehr unsichere Beurteilung der Länge und Ausmaße der Last durch den Fahrer wird in diesem Fall durch eine zuverlässige Berechnung ersetzt. Die zugrundeliegenden geometrischen Berechnungsmethoden unterscheiden sich nicht vom Stand der Technik. Jedoch werden die bisherigen festen Fahrzeugkonturen ergänzt um entsprechende Konturen einer Last.

In einem Aspekt der Erfindung ist oder sind eine Last oder mehrere verschiedene Lasten als virtuelles Modell einer Last, insbesondere einer längs oder quer geförderten Europalette, oder virtuelle Modelle verschiedener Lasten mit vorgegebenen Abmessungen in der Bildverarbeitungsvorrichtung hinterlegt, wobei insbesondere ein Fahrer des Flurförderzeugs die Last und/oder ihre Orientierung am Flurförderzeug auswählt. Ein häufig vorkommender Fall wird der Fall einer Europalette sein, deren Ausmaße standardisiert sind, und die entweder längs oder quer auf der Gabel des Gabelstaplers bzw. Flurförderzeugs transportiert werden. Die Last auf der Europalette ist in den meisten Fällen so verpackt, dass sie nicht über die Europalette hinausragt.

Wenn, insbesondere zusätzlich, eine Last mittels eines Messsystems am Flurförderzeug vermessen wird und in der Bildverarbeitungsvorrichtung anhand von Ergebnissen der Vermessung der dem Lenkeinschlag entsprechende Fahrweg berechnet wird, ist eine sehr effiziente und modellunabhängige Weiterbildung des Verfahrens erreicht. Dazu ist das Flurförderzeug mit einem Messsystem ausgestattet, welches, beispielsweise auf einer Mehrzahl von Kameras basierend, die Last entweder außerhalb oder am Flurförderzeug vermisst und die entsprechenden Vermessungsdaten der Bildverarbeitungsvorrichtung zur Verfügung stellt.

In einem weiteren Aspekt der Erfindung werden die Fahrwege des Flurförderzeugs und der Last über eine Darstellung der Umgebung in Bewegungsrichtung des Flurförderzeugs überlagert. Dabei ist es möglich, dass nur derjenige Teil des Fahrwegs der Last dargestellt wird, welcher über den Fahrweg des Flurförderzeugs hinausgeht. Somit ergibt sich beispielsweise eine seitliche Begrenzung, die, beispielsweise bei einer Linkskurve, auf der rechten Seite, und bei einer Rechtskurve auf der linken Seite des Fahrwegs des Flurförderzeugs an sich dargestellt wird, da die Last an der jeweils außen liegenden Seite der Kurve über den Fahrweg des Flurförderzeugs hinausragt.

Zur Darstellung ist als Aspekt der Erfindung vorgesehen, dass die 360°-Umgebung oder ein Teil der Umgebung des Flurförderzeugs von oben aus einer Vogelperspektive oder einer Schrägansicht dargestellt wird. Dies erfolgt insbesondere zusätzlich zu oder umschaltbar von einer Darstellung aus der Sicht des Fahrers. Ein System, mit dem eine Vogelperspektive dargestellt wird, ist beispielsweise das Surroundview-System von Bosch. Dieses verwendet mehrere Nahbereichkameras, aus deren Bilderströmen ein gemeinsames Bild aus der Vogelperspektive errechnet wird. Unter einer Schrägansicht ist beispielsweise die aus modernen Navigationsgeräten bekannte Darstellung zu verstehen, bei der die Betrachtungsperspektive eine Vogelperspektive ist, die schräg hinter dem Fahrzeug angeordnet und schräg nach vorne und unten gerichtet ist, so dass das Fahrzeug im Blickfeld ist.

In einem weiteren Aspekt der Erfindung wird bzw. werden das Flurförderzeug und/oder die Last als virtuelles Modell des Flurförderzeugs bzw. als virtuelles Modell der Last den von der wenigstens einen Kamera erfassten Bildern überlagert. Vorteilhafterweise wird die Last virtuell auf Zinken der virtuellen Darstellung des Flurförderzeuges getragen dargestellt. Die Darstellung des Flurförderzeugs und/oder der Last als jeweils virtuelles Modell kann fest eingestellt oder zuschaltbar sein. Damit wird dem Fahrer des Flurförderzeugs eine leicht verständliche räumliche Referenz für den eigenen Standpunkt und die Ausmaße der bewegten Objekte gegeben.

In einem weiteren Aspekt der Erfindung sind virtuelle Modelle von einem oder mehreren Anbaugeräten für das Flurförderzeug auswählbar oder durch einen Fahrer oder Servicetechniker definierbar. Ohne die Auswahl und den Schutzbereich der Erfindung einzuschränken, seien rein beispielhaft als entsprechende Anbaugeräte Kühlschrankklemmen, Papierdorne mit oder ohne Papierrolle, Langgut, variable Getränkeklammern, Seitenschieber, Zinkenverstellgeräte, Mehrfach-Palettengeräte, Drehgeräte, Klammergabeln, Ballenklammern, Schubgabeln, Fassklammern, Lastschutzgittern und/oder Kranausleger genannt.

Bei Anbaugeräten, die sich während der Fahrt verstellen lassen, wird oder werden gemäß einem weiteren Aspekt der Erfindung mittels wenigstens eines Sensors oder wenigstens einer Kamera eine aktuelle Position und/oder Orientierung erfasst, welche bei der Berechnung des Fahrwegs berücksichtigt werden. Dies kann auch bei der Darstellung Berücksichtigung finden.

Bei einem Flurförderzeug mit Seitenschieber wird vorteilhafterweise das virtuelle Modell der Last bei der Berechnung des Fahrwegs mitverschoben. Alternativ oder zusätzlich dazu wird das virtuelle Modell der Last in einer Mittelstellung und/oder in einer linken und/oder rechten Extrempositionen eingeblendet. Auch diese Einblendung ist vorzugsweise ein- und ausschaltbar. Mit einem Seitenschieber lässt sich die Last auf der Gabel nach links und rechts verschieben. Insofern ist es vorteilhaft, bei der Berechnung des Fahrwegs und der Darstellung der virtuellen Last diese Last der Seitenschieberposition entsprechend dynamisch mit zu verschieben bzw. zu verändern. Wenn die Position des Seitenschiebers unbekannt ist, kann in der Darstellung die Last mit Fahrweg in der Mittelstellung eingeblendet werden und außerdem in dem Fall, dass die Last maximal nach rechts bzw. links verschoben ist. Da der Fahrer meistens mit dem Seitenschieber in der Mitte fährt, und der Seitenschieber nur zum Einlagern verwendet wird, kann diese Anzeige in einer Variante auch ausgeschaltet werden.

Vorzugsweise wird ferner ein variabler Abstand zwischen einem Mast und einem Gabelrücken des Flurförderzeugs bei der Berechnung des Fahrwegs der Last berücksichtigt.

Eine weitere Entlastung des Fahrers wird erreicht, wenn eine Last nur dann virtuell im dargestellten Bild angezeigt wird, wenn ein Lastsensor die Last erkennt.

Die der Erfindung zugrunde liegende Aufgabe wird auch durch ein Flurförderzeug, insbesondere Gabelstapler, mit einer Lenkvorrichtung und einem Umgebungsanzeigesystem, welches wenigstens eine Kamera, eine Bildverarbeitungsvorrichtung und eine im Bereich eines Fahrerplatzes des Flurförderzeugs angeordnete Anzeigevorrichtung umfasst, gelöst, wobei die Lenkvorrichtung einen Sensor zur Erfassung eines Lenkeinschlags umfasst und das Umgebungsanzeigesystem ausgebildet ist, mittels der wenigstens einen Kamera Bilder wenigstens eines Teils der Umgebung des Flurförderzeugs zu erfassen und in der Bildverarbeitungsvorrichtung ein dem erfassten Lenkeinschlag entsprechender Fahrweg des Flurförderzeugs über die erfassten Bilder zu überlagern und die mit dem Fahrweg überlagerten Bilder auf der Anzeigevorrichtung anzuzeigen, welches dadurch weitergebildet ist, dass die Bildverarbeitungsvorrichtung ausgebildet und eingerichtet ist, einen dem erfassten Lenkeinschlag entsprechenden Fahrweg einer auf dem Flurförderzeug geförderten Last über die erfassten Bilder zu überlagern und über die Anzeigevorrichtung anzuzeigen.

Das Flurförderzeug gemäß der Erfindung verwirklicht die gleichen Merkmale, Eigenschaften und Vorteile wie das zuvor beschriebene erfindungsgemäße Verfahren.

In einem Aspekt der Erfindung ist ein Messsystem umfasst, mit dem für eine Last Vermessungsdaten erfassbar sind, wobei die Bildverarbeitungsvorrichtung ausgebildet und eingerichtet ist, die Vermessungsdaten der Last zur Berechnung des Fahrwegs der Last zu verwenden.

In einem weiteren Aspekt der Erfindung ist das Umgebungsanzeigesystem ausgebildet und eingerichtet, im angezeigten Bild ein virtuelles Modell des Flurförderzeugs und/oder ein virtuelles Modell der Last darzustellen, wobei insbesondere die Darstellung des Fahrwegs der Last, des virtuellen Modells des Flurförderzeugs und/oder des virtuellen Modells der Last zu- und abschaltbar ist.

Ferner sind das Flurförderzeug und das Umgebungsanzeigesystem in einem weiteren Aspekt der Erfindung ausgebildet und eingerichtet, ein zuvor beschriebenes erfindungsgemäßes Verfahren durchzuführen. Hierzu ist das Flurförderzeug beziehungsweise das Umgebungsanzeigesystem mit den entsprechenden Mess- und Steuerungsvorrichtungen ausgestattet, die zur Ausführung des Verfahrens notwendig sind oder hilfreich sind. Insbesondere verfügt das Flurförderzeug über Sensoren zur Positions- und/oder Orientierungsüberwachung von Anbaugeräten und/oder der Last. Alternativ oder zusätzlich hierzu umfasst das Umgebungsanzeigesystem virtuelle Modelle eines oder mehrerer verschiedener Lasten und/oder Anbaugeräte zur Auswahl oder ist zur Eingabe von Abmessungen einer noch nicht verzeichneten Last ausgebildet und eingerichtet. Somit sind das Flurförderzeug bzw. das Umgebungsanzeigesystem ausgestattet und eingerichtet, das erfindungsgemäße Verfahren zu verwirklichen und somit sämtliche Merkmale, Vorteile und Eigenschaften desselben ebenfalls zu verkörpern.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Fahrsituation in einer Vogelperspektive,
- Fig. 2: schematisch eine weitere Fahrsituation in einer Vogelperspektive und
- Fig. 3A - 3C: schematisch berechnete Fahrwege in einer Fahrerperspektive.

In den Zeichnungen sind jeweils gleiche oder gleichartige Elemente und/oder Teile mit denselben Bezugsziffern versehen, so dass von einer erneuten Vorstellung jeweils abgesehen wird.

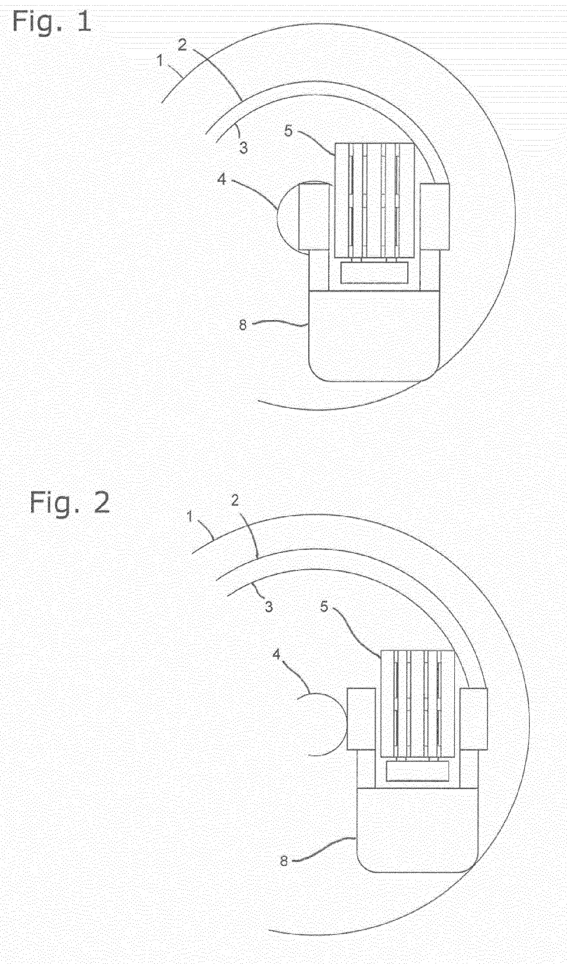

Die Figuren 1 und 2 zeigen schematisch eine Fahrsituation in einer Vogelperspektive, wie sie in einem Surroundview-System darzustellen wäre, wenn ein Flurförderzeug mit mehreren Nahbereichkameras ausgestattet ist, mit denen die Umgebung des Flurförderzeugs in allen Richtungen aufgenommen wird. In diesem Fall wird ein virtuelles Modell 8 des Flurförderzeugs dargestellt mit einem virtuellen Modell 5 einer Last, in diesem Fall eine links beförderte Europalette. Diese befindet sich auf nur schematisch dargestellten Zinken der Transportgabel des Flurförderzeugs. Dem Bild sind verschiedene Fahrwege überlagert, nämlich ein Fahrweg 1 für das Heck des Fahrzeugs, ein Fahrweg 2 für die Front des rechten Arms des Fahrzeugs und zusätzlich ein Lastfahrweg 3 der Last 5. Außerdem ist der Fahrzeugfahrweg 4 der Innenseite der Front des Fahrzeugs dargestellt. Dabei unterscheiden sich die Darstellungen in den Figuren 1 und 2 in dem gewählten Lenkeinschlag sowie der Tatsache, dass das Flurförderzeug sich im Fall der Figur 1 um das linke vordere Rad dreht, während in Figur 2 das Zentrum des Fahrwegs außerhalb des Fahrzeugs liegt.

Wie den Figuren 1 und 2 zu entnehmen ist, kann sich besonders in engen Rangiersituationen der Fall ergeben, dass das Flurförderzeug zunächst mit einer Last an eine Begrenzung stößt, bevor es mit einem Teil des Fahrzeugs selbst in Kontakt mit einer Mauer oder einem anderen Gegenstand kommt. Die in Figur 1 und 2 gezeigte Darstellung kann zusätzlich oder alternativ zu einer anderen perspektivischen Ansicht, beispielsweise einer Ansicht von schräg hinten oben nach schräg vorne unten oder einer Fahreransicht, angezeigt werden.

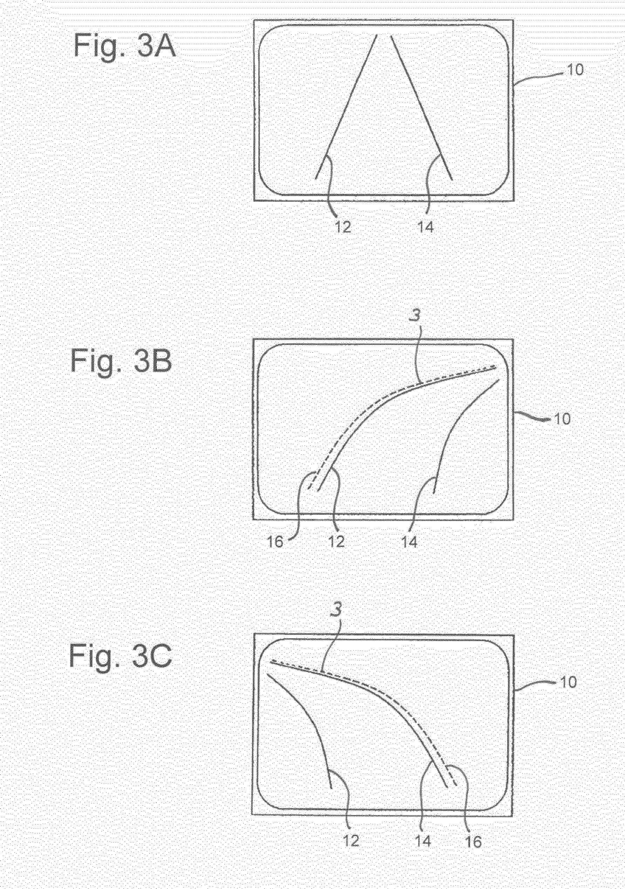

Die Figuren 3A, 3B und 3C zeigen schematisch Realisierungen auf einer Anzeigevorrichtung 10 aus einer Fahrerperspektive. Bei einem Lenkeinschlag von 0° ergibt sich gemäß Fig. 3A ein linker Fahrzeugfahrweg 12 und ein rechter Fahrzeugfahrweg 14, die, perspektivisch korrekt, in die Ferne aufeinander zulaufen. Bei einem Lenkeinschlag nach rechts ergibt sich, wie in Figur 3B gezeigt, ein perspektivisch verzerrter gekrümmter Verlauf der linken und rechten Fahrzeugfahrwege 12, 14, wobei außerdem an der Außenseite ein Lastfahrweg 16 zusätzlich angezeigt wird, wobei in diesem Fall die Last derart ausladend ist, dass sie über den linken Fahrweg 12 hinausragt. Demgegenüber ist in Figur 3C der umgekehrte Fall einer nach links eingeschlagenen Lenkung gezeigt, wo der Lastfahrweg 16 an der Außenseite, also rechts, über den rechten Fahrzeugfahrweg 14 hinausragt. Die Last entspricht insofern nicht derjenigen aus den Figuren 1 und 2, als in den ersten Figuren der Fahrweg der Last gegenüber dem Fahrzeugfahrweg 2 an der Front des Radarms nach innen versetzt ist, und nicht nach außen.

In der Fahrerperspektive der Figuren 3A bis 3C sind weder das Fahrzeug noch die Last als virtuelles Modell zu sehen. Eine Einblendung der Last, beispielsweise als Drahtmodell oder als semi transparentes Modell, ist möglich. Ebenso ist es möglich, beispielsweise das vordere Ende der Last in die Darstellung einzublenden, um es dem Fahrer zu ermöglichen, abzuschätzen, wie weit das Fahrzeug noch fahren darf, bevor die Last an ein Hindernis stößt. Dies kann auch mit Hilfslinien erreicht werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Fahrzeugfahrweg Heck
- 2: Fahrzeugfahrweg Radarm Front
- 3: Lastfahrweg
- 4: Fahrzeugfahrweg Innenseite Front
- 5: virtuelles Modell der Last
- 8: virtuelles Modell des Flurförderzeugs
- 10: Anzeigevorrichtung
- 12: Fahrzeugfahrweg links
- 14: Fahrzeugfahrweg rechts
- 16: Lastfahrweg

## Patentansprüche

1. Verfahren zur Fahrunterstützung bei einem Flurförderzeug, insbesondere Gabelstapler, welches eine Lenkvorrichtung und ein Umgebungsanzeigesystem umfasst, welches wenigstens eine Kamera, eine Bildverarbeitungsvorrichtung und eine im Bereich eines Fahrerplatzes des Flurförderzeugs angeordnete Anzeigevorrichtung (10) umfasst, wobei ein Lenkeinschlag der Lenkvorrichtung erfasst wird und mittels der wenigstens einen Kamera Bilder wenigstens eines Teils der Umgebung des Flurförderzeugs erfasst werden und in der Bildverarbeitungsvorrichtung ein dem erfassten Lenkeinschlag entsprechender Fahrweg (1, 2, 4; 12, 14) des Flurförderzeugs über die erfassten Bilder überlagert wird und die mit dem Fahrweg (1, 2, 4; 12, 14) überlagerten Bilder auf der Anzeigevorrichtung (10) angezeigt werden, **dadurch gekennzeichnet, dass** ein dem erfassten Lenkeinschlag entsprechender Fahrweg (3; 16) einer auf dem Flurförderzeug geförderten Last über die erfassten Bilder überlagert und angezeigt wird.

2. Verfahren nach Anspruch 1, **dadurch gekennzeichnet, dass** eine Last oder mehrere verschiedene Lasten als virtuelles Modell (5) einer Last, insbesondere einer längs oder quer geförderten Europalette, oder virtuelle Modelle verschiedener Lasten mit vorgegebenen Abmessungen in der Bildverarbeitungsvorrichtung hinterlegt ist oder sind, wobei insbesondere ein Fahrer des Flurförderzeugs die Last und/oder ihre Orientierung am Flurförderzeug auswählt.

3. Verfahren nach Anspruch 1 oder 2, **dadurch gekennzeichnet, dass**, insbesondere zusätzlich, eine Last mittels eines Messsystems am Flurförderzeug vermessen wird und in der Bildverarbeitungsvorrichtung anhand von Ergebnissen der Vermessung der dem Lenkeinschlag entsprechende Fahrweg berechnet wird.

4. Verfahren nach einem der Ansprüche 1 bis 3, **dadurch gekennzeichnet, dass** die Fahrwege des Flurförderzeugs und der Last über eine Darstellung der Umgebung in Bewegungsrichtung des Flurförderzeugs überlagert werden.

5. Verfahren nach einem der Ansprüche 1 bis 4, **dadurch gekennzeichnet, dass**, insbesondere zusätzlich oder umschaltbar, die 360°-Umgebung oder ein Teil der Umgebung des Flurförderzeugs von oben aus einer Vogelperspektive oder einer Schrägansicht dargestellt wird.

6. Verfahren nach einem der Ansprüche 1 bis 5, **dadurch gekennzeichnet, dass** das Flurförderzeug und/oder die Last als virtuelles Modell (8) des Flurförderzeugs bzw. als virtuelles Modell (5) der Last, den von der wenigstens einen Kamera erfassten Bildern, insbesondere zuschaltbar, überlagert wird oder werden, wobei die Last insbesondere virtuell auf Zinken der virtuellen Darstellung (8) des Flurförderzeuges getragen dargestellt wird.

7. Verfahren nach einem der Ansprüche 1 bis 6, **dadurch gekennzeichnet, dass** virtuelle Modelle von einem oder mehreren Anbaugeräten für das Flurförderzeug auswählbar oder durch einen Fahrer oder Servicetechniker definierbar sind, insbesondere Kühlschrankklemmen, Papierdorne mit oder ohne Papierrolle, Langgut, variable Getränkeklammern, Seitenschieber, Zinkenverstellgeräte, Mehrfach-Palettengeräte, Drehgeräte, Klammergabeln, Ballenklammern, Schubgabeln, Fassklammern, Lastschutzgittern und/oder Kranausleger.

8. Verfahren nach Anspruch 7, **dadurch gekennzeichnet, dass** bei Anbaugeräten, die sich während der Fahrt verstellen lassen, mittels wenigstens eines Sensors oder wenigstens einer Kamera eine aktuelle Position und/oder Orientierung erfasst wird oder werden, welche bei der Berechnung des Fahrwegs berücksichtigt werden.

9. Verfahren nach einem der Ansprüche 1 bis 8, **dadurch gekennzeichnet, dass** bei einem Flurförderzeug mit Seitenschieber das virtuelle Modell (5) der Last bei der Berechnung des Fahrwegs mitverschoben wird und/oder in einer Mittelstellung und/oder linken und/oder rechten Extrempositionen eingeblendet wird, wobei die Einblendung insbesondere ein- und ausschaltbar ist.

10. Verfahren nach Anspruch 9, **dadurch gekennzeichnet, dass** ein variabler Abstand zwischen einem Mast und einem Gabelrücken des Flurförderzeugs bei der Berechnung des Fahrwegs der Last berücksichtigt wird.

11. Verfahren nach einem der Ansprüche 1 bis 10, **dadurch gekennzeichnet, dass** eine Last nur dann virtuell im dargestellten Bild angezeigt wird, wenn ein Lastsensor die Last erkennt.

12. Flurförderzeug, insbesondere Gabelstapler, mit einer Lenkvorrichtung und einem Umgebungsanzeigesystem, welches wenigstens eine Kamera, eine Bildverarbeitungsvorrichtung und eine im Bereich eines Fahrerplatzes des Flurförderzeugs angeordnete Anzeigevorrichtung (10) umfasst, wobei die Lenkvorrichtung einen Sensor zur Erfassung eines Lenkeinschlags umfasst und das Umgebungsanzeigesystem ausgebildet ist, mittels der wenigstens einen Kamera Bilder wenigstens eines Teils der Umgebung des Flurförderzeugs zu erfassen und in der Bildverarbeitungsvorrichtung ein dem erfassten Lenkeinschlag entsprechender Fahrweg (1, 2, 4; 12, 14) des Flurförderzeugs über die erfassten Bilder zu überlagern und die mit dem Fahrweg (1, 2, 4; 12, 14) überlagerten Bilder auf der Anzeigevorrichtung (10) anzuzeigen, **dadurch gekennzeichnet, dass** die Bildverarbeitungsvorrichtung ausgebildet und eingerichtet ist, einen dem erfassten Lenkeinschlag entsprechenden Fahrweg (3; 16) einer auf dem Flurförderzeug geförderten Last über die erfassten Bilder zu überlagern und über die Anzeigevorrichtung (10) anzuzeigen.

13. Flurförderzeug nach Anspruch 12, **dadurch gekennzeichnet, dass** ein Messsystem umfasst ist, mit dem für eine Last Vermessungsdaten erfassbar sind, wobei die Bildverarbeitungsvorrichtung ausgebildet und eingerichtet ist, die Vermessungsdaten der Last zur Berechnung des Fahrwegs (3; 16) der Last zu verwenden.

14. Flurförderzeug nach Anspruch 12 oder 13, **dadurch gekennzeichnet, dass** das Umgebungsanzeigesystem ausgebildet und eingerichtet ist, im angezeigten Bild ein virtuelles Modell (8) des Flurförderzeugs und/oder ein virtuelles Modell (5) der Last darzustellen, wobei insbesondere die Darstellung des Fahrwegs der Last, des virtuellen Modells (8) des Flurförderzeugs und/oder des virtuellen Modells (5) der Last zu- und abschaltbar ist.

15. Flurförderzeug nach einem der Ansprüche 12 bis 14, **dadurch gekennzeichnet, dass** das Flurförderzeug und das Umgebungsanzeigesystem ausgebildet und eingerichtet sind, ein Verfahren nach einem der Ansprüche 1 bis 11 durchzuführen, wobei insbesondere das Flurförderzeug Sensoren zur Positions- und/oder Orientierungsüberwachung von Anbaugeräten und/oder der Last umfasst und/oder das Umgebungsanzeigesystem virtuelle Modelle eines oder mehrerer verschiedener Lasten und/oder Anbaugeräte zur Auswahl umfasst oder zur Eingabe von Abmessungen einer noch nicht verzeichneten Last ausgebildet und eingerichtet ist.

## Claims

1. A method for providing driver assistance in an industrial truck, in particular a forklift, which comprises a steering apparatus and a surrounding area display system which comprises at least one camera, an image processing apparatus and a display apparatus (10) arranged in the region of a driver's position of the industrial truck, wherein a steering angle of the steering apparatus is captured and images of at least part of the surrounding area of the industrial truck are captured by means of the at least one camera and a travel path (1, 2, 4; 12, 14) of the industrial truck corresponding to the captured steering angle is superimposed on the captured images in the image processing apparatus and the images having the superimposed travel path (1, 2, 4; 12, 14) are displayed on the display apparatus (10), **characterised in that** a travel path (3; 16) of a load transported on the industrial truck, which corresponds to the captured steering angle, is superimposed on the captured images and displayed.

2. The method according to Claim 1, **characterised in that** one load or multiple different loads is or are stored in the image processing apparatus as a virtual model (5) of a load, in particular of a longitudinally or transversely transported Euro pallet, or as virtual models of different loads having predefined dimensions, wherein a driver of the industrial truck in particular selects the load and/or its orientation on the industrial truck.

3. The method according to Claim 1 or 2, **characterised in that**, in particular additionally, a load is measured by means of a measurement system on the industrial truck and the travel path corresponding to the steering angle is calculated in the image processing apparatus on the basis of the results of the measurement.

4. The method according to any one of Claims 1 to 3, **characterised in that** the travel paths of the industrial truck and of the load are superimposed on a representation of the surrounding area in a direction of motion of the industrial truck.

5. The method according to any one of Claims 1 to 4, **characterised in that** all (360°) or part of the surrounding area of the industrial truck is, in particular additionally or switchably, represented from above from a bird's eye view or an oblique view.

6. The method according to any one of Claims 1 to 5, **characterised in that** the industrial truck and/or the load as a virtual model (8) of the industrial truck or respectively as a virtual model (5) of the load is or are, in particular switchably, superimposed on the images captured by the at least one camera, wherein the load is in particular represented supported virtually on forks of the virtual representation (8) of the industrial truck.

7. The method according to any one of Claims 1 to 6, **characterised in that** virtual models of one or more attachments for the industrial truck can be selected or can be defined by a driver or service technician, in particular refrigerator clamps, paper mandrels with or without paper rolls, long goods, variable beverage clamps, side shifters, fork adjusters, multi-pallet devices, rotating devices, fork clamps, bale clamps, retractable forks, drum clamps, load guards and/or crane arms.

8. The method according to Claim 7, **characterised in that** in the case of attachments which can be adjusted during travel, a current position and/or orientation is or are captured by means of at least one sensor or at least one camera and is or are considered in the calculation of the travel path.

9. The method according to any one of Claims 1 to 8, **characterised in that** in the case of an industrial truck having side shifters, the virtual model (5) of the load is also displaced in the calculation of the travel path, and/or is inserted in a centre position and/or extreme left and/or right positions, wherein the insertion can in particular be switched on and off.

10. The method according to Claim 9, **characterised in that** a variable spacing between a mast and a back end of a fork of the industrial truck is considered in the calculation of the travel path of the load.

11. The method according to any one of Claims 1 to 10, **characterised in that** a load is only displayed virtually in the represented image if a load sensor detects the load.

12. An industrial truck, in particular a forklift, having a steering apparatus and a surrounding area display system, which comprises at least one camera, an image processing apparatus and a display apparatus (10) arranged in the region of a driver's position of the industrial truck, wherein the steering apparatus comprises a sensor for capturing a steering angle and the surrounding area display system is configured to capture images of at least part of the surrounding area of the industrial truck by means of the at least one camera and to superimpose a travel path (1, 2, 4; 12, 14) of the industrial truck, which corresponds to the captured steering angle, on the captured images in the image processing apparatus and to display the images having the superimposed travel path (1, 2, 4; 12, 14) on the display apparatus (10), **characterised in that** the image processing apparatus is configured and set up to superimpose a travel path (3; 16) of a load transported on the industrial truck, which corresponds to the captured steering angle, on the captured images and to display said travel path by means of the display apparatus (10).

13. The industrial truck according to Claim 12, **characterised in that** it comprises a measurement system which can capture measurement data for a load, wherein the image processing apparatus is configured and set up to use the measurement data of the load to calculate the travel path (3; 16) of the load.

14. The industrial truck according to Claim 12 or 13, **characterised in that** the surrounding area display system is configured and set up to represent a virtual model (8) of the industrial truck and/or a virtual model (5) of the load in the displayed image, wherein the representation of the travel path of the load, of the virtual model (8) of the industrial truck and/or of the virtual model (5) of the load can in particular be switched on and off.

15. The industrial truck according to any one of Claims 12 to 14, **characterised in that** the industrial truck and the surrounding area display system are configured and set up to perform a method according to any one of Claims 1 to 11, wherein the industrial truck in particular comprises sensors for monitoring the position and/or orientation of attachments and/or of the load, and/or the surrounding area display system comprises selectable virtual models of one or more different loads and/or attachments or is configured and set up to enter dimensions of a load which has not yet been recorded.

## Revendications

1. Procédé d'aide à la conduite d'un chariot de manutention, en particulier d'un chariot élévateur à fourche, qui comprend un dispositif de direction et un système d'affichage de l'environnement, qui comprend au moins une caméra, un dispositif de traitement d'images et un dispositif d'affichage (10) disposé dans la zone de l'emplacement du conducteur du chariot, un angle de braquage du dispositif de direction étant détecté et des images de l'environnement au moins partiel du chariot étant capturées par la caméra, et, dans l'appareil de traitement d'images, un trajet de déplacement (1, 2, 4 ; 12, 14) du chariot de manutention correspondant à l'angle de braquage détecté est superposé aux images détectées et les images superposées au trajet de déplacement (1, 2, 4 ; 12, 14) sont affichées sur le dispositif d'affichage (10), **caractérisé en ce qu'**un trajet de déplacement (3 ; 16) correspondant à l'angle de braquage détecté d'une charge transportée sur le chariot est superposé aux images détectées et affiché sur celles-ci.

2. Procédé selon la revendication 1, **caractérisé en ce qu'**une ou plusieurs charges différentes sont chargées ou aptes à être chargées dans le dispositif de traitement d'image en tant que modèle virtuel (5) d'une charge, en particulier d'une europalette transportée longitudinalement ou transversalement, ou en tant que modèles virtuels de charges différentes avec des dimensions prédéterminées, un conducteur du chariot de manutention étant en particulier apte à sélectionner la charge et/ou son orientation sur le chariot de manutention.

3. Procédé selon la revendication 1 ou la revendication 2, **caractérisé en ce qu'**en particulier, en outre, une charge est mesurée sur le chariot de manutention au moyen d'un système de mesure et **en ce que** le trajet de déplacement correspondant à l'angle de braquage est calculé dans le dispositif de traitement d'images sur la base des résultats des mesures.

4. Procédé selon l'une des revendications 1 à 3, **caractérisé en ce que** les trajets du chariot de manutention et la charge sont superposés par une représentation de l'environnement dans la direction du déplacement du chariot de manutention.

5. Procédé selon l'une des revendications 1 à 4, **caractérisé en ce que**, en particulier de manière supplémentaire ou commutable, l'environnement à 360° ou une partie de l'environnement du chariot de manutention est représenté, de dessus, par une vue plongeante ou oblique.

6. Procédé selon l'une des revendications 1 à 5, **caractérisé en ce que** le chariot de manutention et/ou la charge est ou sont superposés en tant que modèle virtuel (8) du chariot de manutention ou en tant que modèle virtuel (5) de la charge qui est superposé ou apte à être superposé, de façon notamment commutable, aux images captées par ladite au moins une caméra, en particulier les images qui peuvent être activées, la charge étant notamment affichée virtuellement comme étant portée sur la fourche de la représentation virtuelle (8) du chariot de manutention.

7. Procédé selon l'une des revendications 1 à 6, **caractérisé en ce que** des modèles virtuels d'un ou plusieurs accessoires pour le chariot de manutention peuvent être sélectionnés ou définis par un conducteur ou un technicien de service, en particulier des pinces pour réfrigérateur, des mandrins de papier avec ou sans rouleaux de papier, des marchandises longues, des pinces à contenants variables, des glissières latérales, des positionneurs à fourches, des dispositifs à palettes multiples, des dispositif de retournement, des pinces de fourche, des pinces à balles, des fourches à poussée, des brides de serrage, des protecteurs de charge et / ou les flèches de grue.

8. Procédé selon la revendication 7, **caractérisé en ce que**, dans le cas d'accessoires qui peuvent être réglés en cours de déplacement, une position et/ou orientation actuelle est ou sont détectée(s) au moyen d'au moins un capteur ou au moins une caméra, qui sont pris(s) en compte dans le calcul du déplacement.

9. Procédé selon l'une des revendications 1 à 8, **caractérisé en ce que**, dans le cas d'un chariot de manutention à déplacement latéral, le modèle virtuel (5) de la charge est également décalé dans le calcul du déplacement et/ou est affiché dans une position centrale et/ou dans des positions extrêmes gauche et/ou droite, l'affichage étant notamment apte à être activé et désactivé.

10. Procédé selon la revendication 9, **caractérisé en ce qu'**une distance variable entre un mât et une fourche arrière du chariot de manutention est prise en compte dans le calcul du déplacement de la charge.

11. Procédé selon l'une des revendications 1 à 10, **caractérisé en ce qu'**une charge n'est affichée virtuellement dans l'image affichée que si un capteur de charge détecte la charge.

12. Chariot de manutention, en particulier chariot élévateur à fourche, comportant un dispositif de direction et un système d'affichage de l'environnement qui comprend au moins une caméra, un dispositif de traitement d'image et un dispositif d'affichage (10) disposé dans la zone d'un emplacement de conduite du chariot, le dispositif de direction comprenant un capteur pour détecter un angle de braquage, et le système d'affichage de l'environnement est conçu pour utiliser ladite au moins une caméra pour capturer des images d'au moins une partie de l'environnement du chariot de manutention, et, dans le dispositif de traitement d'image, un trajet (1, 2, 4; 12, 14) du chariot de manutention correspondant à l'angle de braquage détecté est superposé aux images capturées et pour afficher les images superposées au trajet de déplacement (1, 2, 4 ; 12, 14) sur le dispositif d'affichage (10), **caractérisé en ce que** le dispositif de traitement d'images est conçu et agencé pour superposer un trajet de déplacement (3 ; 16), correspondant à l'angle de braquage détecté, d'une charge transportée sur le chariot de manutention via les images capturées et pour afficher celles-ci via le dispositif d'affichage (10).

13. Chariot de manutention selon la revendication 12, **caractérisé en ce qu'**il comprend un système de mesure avec lequel des données de mesure peuvent être acquises pour une charge, le dispositif de traitement d'image étant conçu et agencé pour utiliser les données de mesure de la charge pour calculer le trajet de déplacement (3 ; 16) de la charge.

14. Chariot de manutention selon la revendication 12 ou la revendication 13, **caractérisé en ce que** le système d'affichage de l'environnement est conçu et agencé pour afficher dans l'image affichée un modèle virtuel (8) du chariot de manutention et/ou un modèle virtuel (5) de la charge, l'affichage du trajet de la charge, du modèle virtuel (8) du chariot de manutention et/ou du modèle virtuel (5) de la charge étant en particulier apte à être activé et désactivé.

15. Chariot de manutention selon l'une des revendications 12 à 14, **caractérisé en ce que** le chariot de manutention et le système d'affichage de l'environnement sont conçus et agencés pour mettre en œuvre un procédé selon l'une des revendications 1 à 11, le chariot de manutention comprenant en particulier des capteurs pour surveiller la position et/ou l'orientation d'accessoires et/ou de la charge, et/ou le système d'affichage de l'environnement comprenant des modèles virtuels d'une ou plusieurs charges et/ou d'accessoires différents pour sélection, ou est conçu et agencé pour entrer des mesures de charge non encore enregistrées.
